# EUROPEAN PATENT APPLICATION

(11) **EP 4 838 390 A1**
(43) Date of publication of application: **11.11.2026**
(21) Application number: 26174142.5
(22) Date of filing: 23.04.2026
(51) Int. Cl.: G06F 21/45, G06F 21/31, G06F 21/34, G06F 21/60

(54) **PROCESSING APPARATUS, METHOD FOR CONTROLLING PROCESSING APPARATUS, AND SYSTEM**

(30) Priority: 09.05.2025 JP 2025078694
(71) Applicant: Sharp Kabushiki Kaisha, Sakai City, Osaka 590-8522 (JP)
(72) Inventor: ONOGI, Kenji, Osaka, 590-8522 (JP)
(74) Representative: Müller Hoffmann & Partner

(57) **Abstract**

A processing apparatus according to the present disclosure includes one or more controllers and a data acquisition unit that acquires data from an external source. The one or more controllers perform a first verification process of determining, based on data identification information corresponding to a code, whether key data is present. The key data is data to which the data identification information is assigned and which includes key information generated based on the code. When it is determined in the first verification process that the key data is present, the one or more controllers acquire the key data via the data acquisition unit, and perform a second verification process based on the key information included in the key data.

## Description

### BACKGROUND OF THE INVENTION

### Field of the Invention

The present disclosure relates to a processing apparatus and the like.

### Description of the Background Art

Some information processing apparatuses, image processing apparatuses, and other various processing apparatuses restrict administrator access by setting an administrator password. These types of processing apparatuses often have a means for changing the administrator password. Typically, a processing apparatus requests input of a current administrator password to change the administrator password; if the administrator forgets the administrator password, the administrator password cannot be changed. To prepare for such a situation, these types of processing apparatuses often further include a means for changing the administrator password without requiring input of the administrator password.

For example, in some image forming apparatuses, when executing a process to change (reset) an administrator password, an administrator or a serviceperson of the image forming apparatus receives a reset key from a person in charge of a sales company of the image forming apparatus, verifies the reset key by the image forming apparatus, and changes the administrator password in accordance with the verification result.

Additionally, in response to a request from a client terminal, some servers generate a file with a filename and a file format based on information of the client terminal. Furthermore, some image forming apparatuses perform maintenance processing using a file by determining that a specific file stored in a Universal Serial Bus (USB) memory is present when the USB memory is inserted into the image forming apparatus.

An object of the present disclosure is to improve the security of a processing apparatus that executes a predetermined process in response to external permission.

### SUMMARY OF THE INVENTION

The present disclosure provides a processing apparatus including one or more controllers and a data acquisition unit that acquires data from an external source. The one or more controllers perform a first verification process of determining, based on data identification information corresponding to a code, whether key data is present. The key data is data that includes key information generated based on the code and to which the data identification information is assigned. When the one or more controllers determine in the first verification process that the key data is present, the one or more controllers acquire the key data via the data acquisition unit and perform a second verification process based on the key information included in the key data.

The present disclosure also provides a method for controlling a processing apparatus including one or more controllers and a data acquisition unit that acquires data from an external source. The method for controlling the processing apparatus includes: performing a first verification process of determining, based on data identification information corresponding to a code, whether key data is present, the key data being data that includes key information generated based on the code and to which the data identification information is assigned; and when the key data is determined in the first verification process to be present, acquiring the key data via the data acquisition unit and performing a second verification process based on the key information included in the key data.

The present disclosure further provides a system including a first processing apparatus and a second processing apparatus. The first processing apparatus outputs a code, performs a first verification process of determining, based on data identification information corresponding to the code, whether key data is present, the key data being data that includes key information generated based on the code and to which the data identification information is assigned, and when the key data is determined in the first verification process to be present, acquires the key data and performs a second verification process based on the key information included in the key data. The second processing apparatus generates the key information based on the code output from the first processing apparatus, generates the key data that includes the key information and has the data identification information corresponding to the code, and outputs the key data.

According to the present disclosure, it is possible to improve the security of a processing apparatus that executes a predetermined process in response to external permission.

### BRIEF DESCRIPTION OF THE DRAWINGS

[FIG. 1] FIG. 1 is a schematic conceptual diagram of a system according to a first embodiment of the present disclosure and a general system.
[FIG. 2] FIG. 2 is a block diagram illustrating a hardware configuration of an image forming apparatus according to the first embodiment of the present disclosure.
[FIG. 3] FIG. 3 is a block diagram illustrating a hardware configuration of a server according to the first embodiment of the present disclosure.
[FIG. 4] FIG. 4 is a schematic conceptual diagram of an administrator password reset method in a general system.
[FIG. 5] FIG. 5 is a schematic conceptual diagram of a general system for an administrator password reset method.
[FIG. 6] FIG. 6 is a block diagram of a controller of the image forming apparatus according to the first embodiment of the present disclosure.
[FIG. 7] FIG. 7 is a block diagram of a storage unit of the image forming apparatus according to the first embodiment of the present disclosure.
[FIG. 8] FIG. 8 is a block diagram of a controller of the server according to the first embodiment of the present disclosure.
[FIG. 9] FIG. 9 is a block diagram of a storage unit of the server according to the first embodiment of the present disclosure.
[FIG. 10] FIG. 10 is a schematic conceptual diagram of an administrator password reset method in the system according to the first embodiment of the present disclosure.
[FIG. 11] FIG. 11 is a schematic conceptual diagram of the system according to the first embodiment of the present disclosure.
[FIG. 12] FIG. 12 is a flowchart illustrating an operation of the image forming apparatus according to the first embodiment of the present disclosure.
[FIG. 13] FIG. 13 is a flowchart illustrating an operation of the server according to the first embodiment of the present disclosure.
[FIG. 14] FIG. 14 is a flowchart illustrating an operation of the image forming apparatus according to the first embodiment of the present disclosure.
[FIG. 15] FIG. 15 is an example of a screen displayed on a display unit of an image forming apparatus according to a second embodiment of the present disclosure.

### DESCRIPTION OF THE PREFERRED EMBODIMENTS

A general method for resetting a password set in a processing apparatus is to require input of a currently set password and, when the password is correctly entered, changes the password to a default password or a newly set password. Also, to prepare for a case where the currently set password is unknown, for example, some information processing apparatuses clear the password in response to an operation on a physical switch provided in an information processing apparatus. This type of method cannot ensure sufficient security if it is not possible to restrict who can physically access the information processing apparatus.

As another general method, a reset key may be sent to a pre-set email address. In this type of method, the password cannot be reset if the information processing apparatus cannot connect to a network.

As another general method, a reset key generated externally through a predetermined procedure is manually input into the information processing apparatus (for example, via an input device such as a keyboard). In this type of method, because the reset key is manually input, there is a practical limit to the size of the reset key. For this reason, algorithms usable for key generation and verification are limited, and as a result, it may be difficult to ensure security.

According to the present disclosure, when a user forgets a password, a reset key file corresponding to a reset key issuance code is obtained by acquiring information of the reset key issuance code displayed on a screen of an information processing apparatus and inputting it into a reset key issuance server. The reset key file is also called a key file. The reset key file is stored in an external storage device (external storage medium) such as a Universal Serial Bus (USB) memory, and the external storage device is connected to the information processing apparatus. By performing a predetermined operation on the information processing apparatus, the reset key file is read from the external storage device into the information processing apparatus. The information processing apparatus verifies the reset key file, based on the reset key issuance code displayed on the screen. If the verification is successful, the information processing apparatus resets the password.

Embodiments in which the processing apparatus of the present disclosure is applied to an image forming apparatus will be described below. The following embodiments are described as examples of the invention described in the claims, and the technical scope of the present disclosure is not limited to the descriptions of the following embodiments. In the following embodiments, a case where the processing apparatus of the present disclosure is applied to an image forming apparatus will be described, but the processing apparatus is not limited to an image forming apparatus such as an MFP. For example, the present disclosure is applicable to a server or a personal terminal such as a personal computer, a tablet, or a smartphone.

### 1. First Embodiment

### 1.1 System Overview

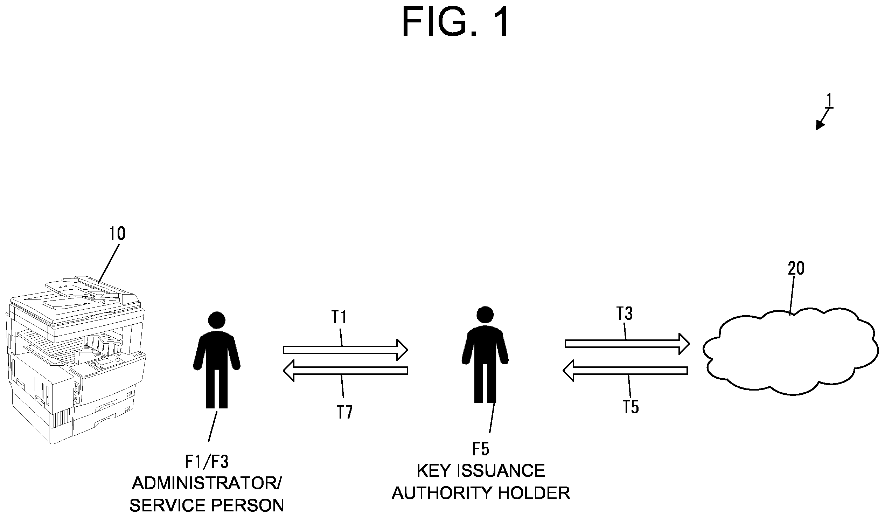

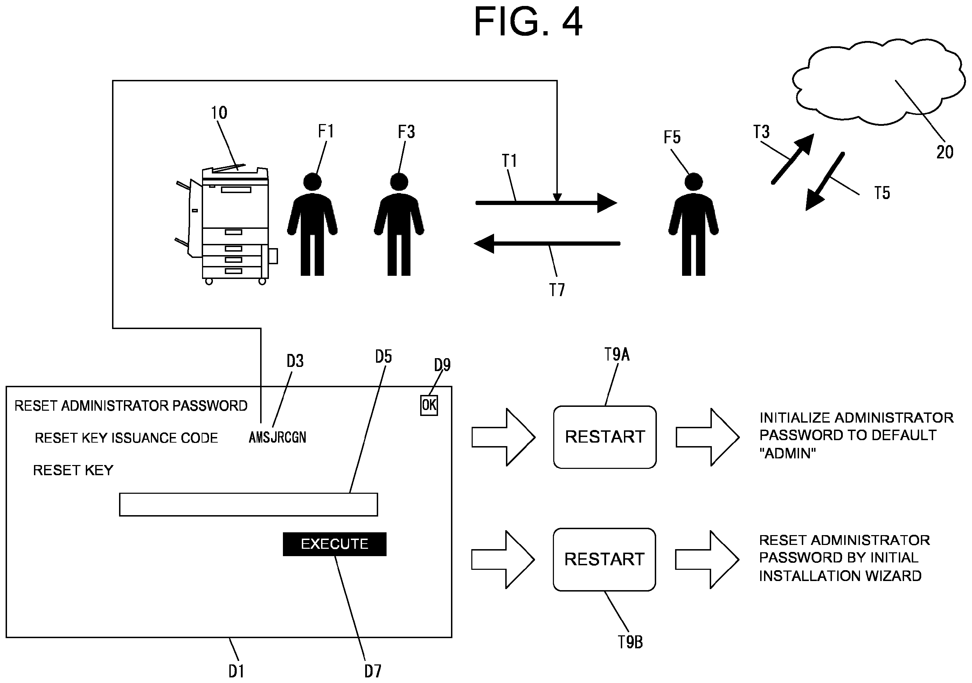

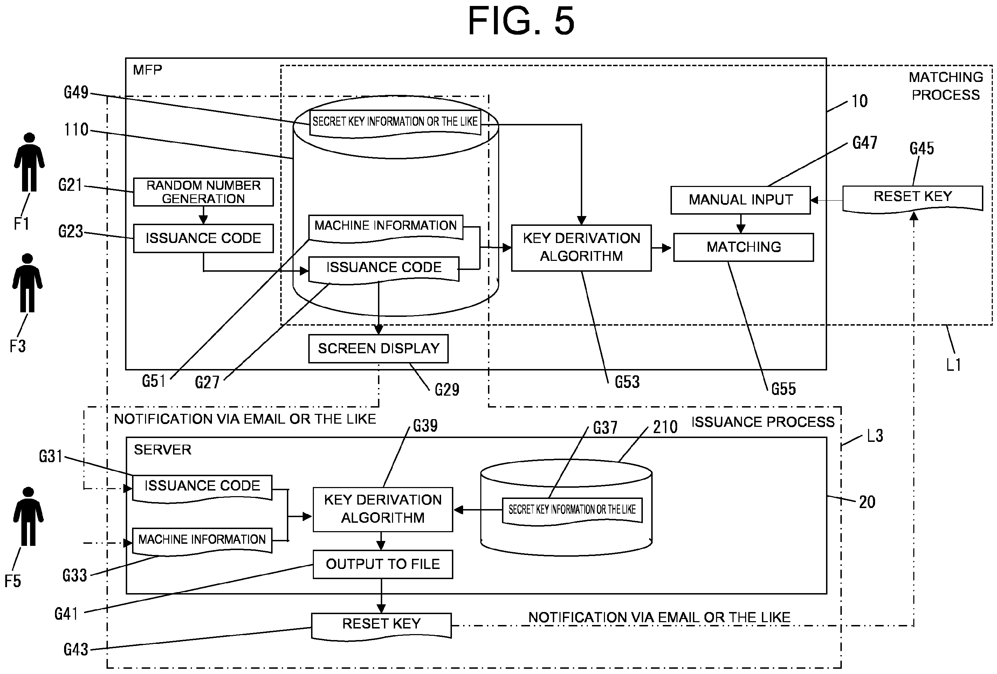

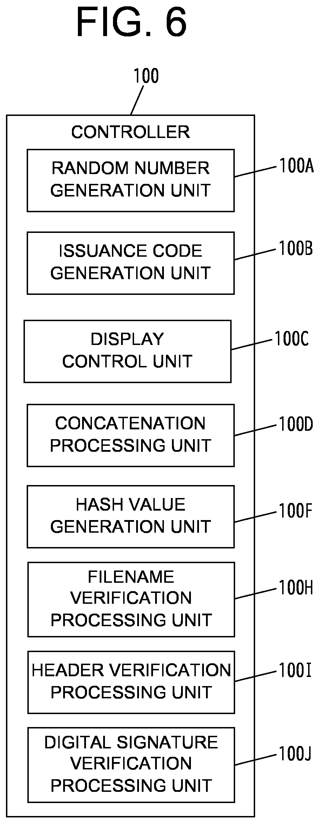

FIG. 1 is a schematic conceptual diagram of a system 1 according to the first embodiment of the present disclosure and a general system. The overview of the system illustrated in FIG. 1 is common to the general system described with reference to FIGS. 4 and 5 and the system of the first embodiment described with reference to FIG. 6 and subsequent figures.

The system 1 includes an image forming apparatus 10 and a server 20. The image forming apparatus 10 is also called a first processing apparatus, and the server 20 is also called a second processing apparatus. The image forming apparatus 10 is an image processing apparatus or a processing apparatus also called a printer, a multi-function printer/peripheral (MFP), or a multi-function peripheral, and typically includes one or more of a copying function, an image scanner function, a facsimile function, and a printer function. The image forming apparatus may further include other functions, such as an email transmission/reception function and a file server function. The image forming apparatus 10 is operated by an administrator F1 of the image forming apparatus 10 or a serviceperson F3 dispatched from a sales company, a manufacturing company, or the like of the image forming apparatus 10.

The server 20 is a server on a network. The server 20 is a server operated by a sales company, a manufacturing company, or the like of the image forming apparatus 10. The server 20 may be configured by a single computer or may be a cloud server on a network. The server 20 may be directly operated by a key issuance authority holder F5 who has the authority to issue a reset key. Alternatively, the key issuance authority holder F5 may access the server 20 via a client terminal (not illustrated).

When the administrator F1 or the serviceperson F3 (hereinafter referred to as the serviceperson F3 or the like) performs a predetermined operation to transition to a screen for requesting a process of resetting the administrator password on the image forming apparatus 10, the image forming apparatus 10 displays a reset key issuance code (hereinafter also simply referred to as an issuance code). The serviceperson F3 or the like notifies the key issuance authority holder F5 of the displayed issuance code (T1). The notification means may be via data communication such as email, or may be transmitted by telephone or directly orally.

After confirming that the notification source of the issuance code is the administrator F1 or the serviceperson F3, the key issuance authority holder F5 enters the notified issuance code into the server 20 (T3). The server 20 generates a reset key (general system) or a reset key file (system of the first embodiment) based on the entered issuance code and outputs it to the key issuance authority holder F5 (T5). The key issuance authority holder F5 provides the received reset key/reset key file to the serviceperson F3 or the like (T7).

The serviceperson F3 or the like inputs the received reset key/reset key file into the image forming apparatus 10. The image forming apparatus 10 verifies the input reset key or reset key file, and if the verification is successful, the image forming apparatus 10 permits and executes the process of resetting the administrator password.

### 1.2 Hardware Configuration of Image Forming Apparatus 10

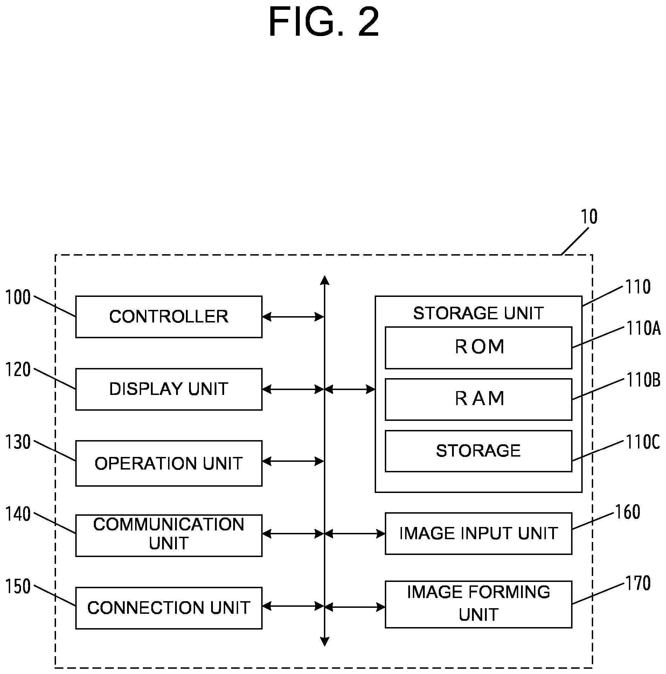

FIG. 2 is a block diagram illustrating the hardware configuration of the image forming apparatus 10 according to the first embodiment of the present disclosure. The hardware configuration of the image forming apparatus 10 illustrated in FIG. 2 is common to the general system described with reference to FIGS. 4 and 5 and the system of the first embodiment described with reference to FIG. 6 and subsequent figures.

A controller 100 controls the entire image forming apparatus 10. The controller 100 includes one or more control devices or one or more control circuits, and is configured by, for example, a central processing unit (CPU) which is a processor that executes various arithmetic processes, a system on a chip (SoC), or the like.

The controller 100 can realize each function by reading a program stored in the storage unit 110 and executing processing.

The storage unit 110 stores various programs and various data necessary for the operation of the image forming apparatus 10. The storage unit 110 includes a read only memory (ROM) 110A, a random access memory (RAM) 110B, and storage 110C. The ROM 110A is a read-only memory and stores, for example, a basic input/output system (BIOS) and firmware. Also, the ROM 110A is used as a main storage device of the controller 100. The RAM 110B is a storage device capable of temporary storage such as a dynamic random access memory (DRAM). The storage 110C is a non-temporary storage device such as a solid state drive (SSD) configured with semiconductor memory or a hard disk drive (HDD) configured with a magnetic disk. The storage unit 110 includes one or more ROM 110A, one or more RAM 110B, and one or more storage 110C. Also, although the storage unit 110 is illustrated as one component for convenience of description, it may be configured as separate devices according to their respective purposes, such as an area used for program execution (a main storage area), an area for storing programs and data (an auxiliary storage area), and an area used as a cache.

A display unit 120 displays images and characters. For example, the display unit 120 includes a liquid crystal display (LCD), an organic electro-luminescence (EL) panel, or the like. The display unit 120 may be a single display device or may further include a display device connected externally. In particular, since the display unit 120 displays (outputs) a reset key issuance code, it is also called a code output unit.

An operation unit 130 accepts an operation input from a user. For example, the operation unit 130 includes hardware keys and/or software keys. Also, the operation unit 130 includes operation keys such as a task key for instructing execution of a task such as FAX transmission or image reading, and a stop key for instructing cancellation of an operation. The operation unit 130 can be configured as a touch panel through which input is possible via the display unit 120. When configured as a touch panel, the operation unit 130 detects a user's touch, tap, swipe operation, or the like on an object displayed via the display unit 120, and can acquire coordinate positions of touch panel information, pressure sensitivity information, and the like. In this case, as an input method of the touch panel, for example, general input methods such as a resistive film method, an infrared method, an electromagnetic induction method, and a capacitive method can be adopted.

A communication unit 140 connects to a network. The communication unit 140 includes, for example, an interface connectable to a wired local area network (LAN), a wireless LAN, or a long term evolution (LTE) network. By connecting the communication unit 140 to the network, the communication unit 140 is able to connect to other devices and external networks. In addition, the communication unit 140 may be an interface that performs short-range wireless communication such as near field communication (NFC) or Bluetooth (registered trademark).

A connection unit 150 connects the image forming apparatus 10 and other equipment. The connection unit 150 is also called a file acquisition unit. For example, the connection unit 150 is a USB interface to which a USB memory or the like is connected. Also, in addition to a USB interface, the connection unit 150 may be an interface for reading from and writing to a memory card such as an SD memory card.

An image input unit 160 reads an image (original) and outputs it as image data. The image input unit 160 includes a general scanner (image input device). Also, the image input unit 160 may input image data from an external storage medium such as a USB memory, or may receive an image via a network.

An image forming unit 170 forms (prints) an image on a medium such as copy paper, based on image data. The printing method of the image forming unit 170 is arbitrary and may be, for example, any of an inkjet printer, a laser printer, a thermal transfer printer, and the like. The image forming unit 170 may be a monochrome printer or a color printer. The image forming unit 170 includes a plurality of sheet accommodating units that accommodate media (also referred to as printing paper or paper) and supply the media for image formation. Although the image forming unit 170 includes two sheet accommodating units 170A and 170B, it may include three or more sheet accommodating units. The image forming unit 170 includes a conveyance mechanism that conveys a media from these plurality of sheet accommodating units. The image forming unit 170 may further include a sorter mechanism or the like that sorts the media after the image is formed.

### 1.3 Hardware Configuration of Server 20

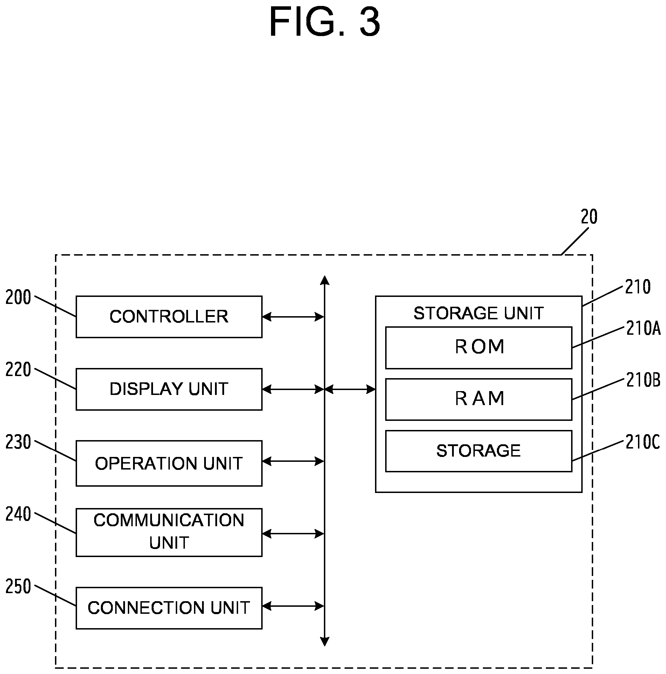

FIG. 3 is a block diagram illustrating the hardware configuration of the server 20 according to the first embodiment of the present disclosure. The hardware configuration of the server 20 illustrated in FIG. 3 is common to the general system described with reference to FIGS. 4 and 5 and the system of the first embodiment described with reference to FIG. 6 and subsequent figures.

The server 20 includes a controller 200, a storage unit 210, a display unit 220, an operation unit 230, a communication unit 240, and a connection unit 250. The descriptions of the controller 200, the storage unit 210, the display unit 220, the operation unit 230, the communication unit 240, and the connection unit 250 are respectively similar to the descriptions of the controller 100, the storage unit 110, the display unit 120, the operation unit 130, the communication unit 140, and the connection unit 150 mentioned above.

### 1.4 General Administrator Password Reset Method

FIG. 4 is a schematic conceptual diagram of an administrator password reset method in a general system. When a predetermined operation for causing a transition to a screen for requesting a process of resetting the administrator password is performed, the controller 100 of the image forming apparatus 10 displays, for example, a screen D1 on the display unit 120.

The screen D1 includes an issuance code display field D3, a reset key input field D5, an execution button D7, and an OK button D9.

The issuance code display field D3 is a field for displaying a reset key. The reset key is randomly generated by the controller 100. The reset key is, for example, a character string having 8 characters. The method of generating the reset key will be described below.

The reset key input field D5 is a field for inputting a reset key received by the serviceperson F3 or the like from the key issuance authority holder F5.

The execution button D7 is a button for executing a process of verifying a character string entered in the reset key input field D5 as a reset key.

The OK button D9 is a cancel button for canceling resetting of the administrator password.

When the screen D1 is displayed on the display unit 120, the serviceperson F3 or the like notifies the key issuance authority holder F5 of the issuance code displayed in the issuance code display field D3 (T1). The key issuance authority holder F5 inputs the notified issuance code into the server 20 (T3). The server 20 generates a reset key based on the entered issuance code, and outputs the generated reset key to the key issuance authority holder F5 (T5). The reset key is, for example, a character string having 20 characters. The key issuance authority holder F5 notifies the serviceperson F3 or the like of the reset key (T7). The serviceperson F3 or the like inputs the notified reset key into the reset key input field D5 and operates the execution button D7 via the operation unit 130. The controller 100 verifies the reset key, based on the character string entered in the reset key input field D5. If verification is successful, the controller 100 restarts the image forming apparatus 10 and changes the administrator password to a default value (for example, "admin") (T9A). Alternatively, if verification is successful, the controller 100 restarts the image forming apparatus 10, executes an initial installation wizard (not illustrated), and accepts resetting of the administrator password (T9B). When the image forming apparatus 10 is restarted, whether the administrator password is changed to a default value (for example, "admin") or is reset may vary depending on whether the destination of a processing apparatus such as the image forming apparatus 10 is a specific destination, such as a country or a region under a security-enhancement law regime.

FIG. 5 is a schematic conceptual diagram of a general system for an administrator password reset method. In the general system described here, both the controller 100 of the image forming apparatus 10 and the controller 200 of the server 20 can execute the same key derivation algorithm (G39, G53). The storage unit 110 of the image forming apparatus 10 and the storage unit 210 of the server 20 each store, in advance, the same secret key information (or shared key information, hereinafter referred to as secret key information or the like) (G37, G49). The storage unit 110 of the image forming apparatus 10 stores, in advance, machine information of the image forming apparatus 10 (G51). The machine information is information regarding the machine of the image forming apparatus 10, and is, for example, a character string indicating a model name of the image forming apparatus 10 and a serial number of the image forming apparatus 10. A block surrounded by a dashed line L1 is a block related to a matching process, and a block surrounded by a dot-dash line L3 is a block related to an issuance process. The issuance process and the matching process use a common key derivation algorithm using a common key. As an example of the key derivation algorithm, an algorithm that performs an HMAC operation on an input using a common key and extracts a part of the result may be considered.

In the image forming apparatus 10, when the serviceperson F3 or the like performs an operation for resetting the administrator password via the operation unit 130, the controller 100 generates a random number (G21), generates an issuance code by converting the generated random number into a character string of a predetermined length (G23), stores it in the storage unit 110 (G27), and displays the issuance code on the display unit 120 (G29). The serviceperson F3 or the like reads the displayed issuance code and notifies the key issuance authority holder F5.

The key issuance authority holder F5 inputs the notified issuance code into the server 20 (G31) and inputs the machine information of the image forming apparatus 10 into the server 20 (G33). The controller 200 of the server 20 generates a reset key by executing the key derivation algorithm (G39) using a character string obtained by concatenating the input issuance code and machine information and the secret key information or the like (G37) stored in advance in the storage unit 210, and outputs a reset key file including the reset key (G41). Instead of attaching the reset key file output by the controller 200 to an email and sending it to the serviceperson F3 or the like, the controller 200 may display the reset key on the display unit 220, and the key issuance authority holder F5 may read the displayed reset key and notify the serviceperson F3 or the like of the reset key directly or orally via telephone or the like.

The serviceperson F3 or the like inputs, via the operation unit 130 of the image forming apparatus 10, the reset key notified by email, orally, or the like, and performs an operation that serves as a trigger for execution of reset (for example, ab operation of the execution button D7) (G47). The controller 100 reads, from the storage unit 110, the machine information (G51) of the image forming apparatus 10 and secret key information or the like (G49), which have been stored in advance, and the issuance code stored at G27 from the storage unit 110. The controller 100 executes the key derivation algorithm (G53) using a character string obtained by concatenating the read machine information and issuance code, together with the read secret key information or the like, to generate a value expected as the reset key. The controller 100 compares the generated expected value of the reset key with the reset key manually entered at G47 (G55), and if the two match, permits and executes resetting of the administrator password. In the reset process, the administrator password may be restored to the default value as in T9A of FIG. 4, or a character string entered by the serviceperson F3 or the like via the operation unit 130 may be set as a new administrator password as in T9B of FIG. 4.

Thus, in the general administrator password reset method, both the controller 100 of the image forming apparatus 10 and the controller 200 of the server 20 execute a common key derivation algorithm. Also, both the storage unit 110 of the image forming apparatus 10 and the storage unit 210 of the server 20 store secret key information or the like. The key derivation algorithm and secret key information or the like are information that should be kept secret from a third party for security. However, for example, by analyzing programs and data of the image forming apparatus 10, there is a possibility that a third party may obtain the key derivation algorithm and secret key information or the like.

### 1.5 Software Configuration

### 1.5.1 Image Forming Apparatus

FIG. 6 is a block diagram illustrating a software configuration in the image forming apparatus 10 according to the first embodiment of the present disclosure. The controller 100 is realized as functional units shown in FIG. 6 by, for example, executing programs and applications stored in the storage unit 110.

A random number generation unit 100A generates a random number by pseudo-random number generation. The random number generation unit 100A may, for example, include dedicated hardware that generates random numbers. Alternatively, the random number generation unit 100A may generate a random number by executing, in software, a cryptographically secure pseudo-random number generation process using, as a seed, a random number sequence generated by an operating system based on entropy collected from various events.

An issuance code generation unit 100B generates, based on the random number generated by the random number generation unit 100A, a random character string having a predetermined number of characters, and outputs the random character string as an issuance code.

A display control unit 100C can control display of various types of information and a user interface. For example, the display control unit 100C may display a display screen on the display unit 120, or may perform control to display a display screen on another device (for example, a terminal device) connected via the communication unit 140, the connection unit 150, or the like. For example, when a terminal device is connected to the image forming apparatus 10, the display control unit 100C transmits screen data in which a display screen is described in Hypertext Markup Language (HTML) or the like to the terminal device. The terminal device can display a display screen corresponding to the screen data by using, for example, a browser.

A concatenation processing unit 100D generates a character string in which an issuance code and machine information are concatenated. The concatenation method, such as the order of the issuance code and the machine information in concatenation and whether a symbol such as a hyphen (-) is inserted between the issuance code and the machine information, is arbitrary, but concatenation is performed using the same concatenation method as that used by a concatenation processing unit 200A of the server 20 described below.

A hash value generation unit 100F generates and outputs a hash value corresponding to an input character string. The hash function used by the hash value generation unit 100F is, for example, SHA-256, but other hash functions may be used. The hash function used by the hash value generation unit 100F is preferably a cryptographic hash function. The hash function used by the hash value generation unit 100F may be, for example, other variations of SHA-2, SHA-224, SHA-384, SHA-512, SHA-512/224, or SHA-512/256. The hash value generation unit 100F generates a hash value using the same hash function as a hash value generation unit 200C of the server 20 described below.

A filename verification processing unit 100H verifies the filename of a file stored in an external storage device based on an issuance code. The verification process performed by the filename verification processing unit 100H is also called a first verification process. More specifically, the filename verification processing unit 100H determines whether a file having a filename including the issuance code, which is generated by the issuance code generation unit 100B and displayed on the display unit 120, is stored in an external storage device connected to the connection unit 150 (here, a USB memory). Also, determination may be made based only on the filename, or determination may be made including a directory hierarchy or a directory name in which the file is stored may be made (for example, whether the file is stored in a directory named "pwrst_key"). Since the reset key issuance code is a unique value across models, even if there are a plurality of reset key files for the same model in the external storage device, it is possible to distinguish them. Therefore, even if a reset key file is stored in the external storage device, it may be determined that an error has occurred if no reset key file corresponding to the model is stored therein. In the first verification process performed by the filename verification processing unit 100H, a file is used as data, and a filename is used as data identification information.

A header verification processing unit 100I verifies a reset key file based on header information of the reset key file. The header information includes, for example, fixed data (a character string) indicating that the file is a reset key file, version information for supporting format changes, information indicating the position (offset address, size) of signature data in the input file, identification information of a key to be used (when the key pair to be used is not fixed), and information indicating an encoding format. The header verification processing unit 100I verifies the header information as follows. That is, the header verification processing unit 100I may, for example, determine whether or not the above-mentioned fixed data and version information are predetermined values, and verify the header information based on the determination result. Alternatively, the header verification processing unit 100I may determine whether the position information of the above-mentioned signature data and the file size are consistent with each other, and verify the header information based on the determination result. Alternatively, the header verification processing unit 100I may verify the header information based on a combination of these determination results.

A digital signature verification processing unit 100J verifies whether a digital signature included in the reset key file is one generated using an appropriate secret key for a character string generated based on the issuance code output by the image forming apparatus 10 and the machine information of the image forming apparatus 10. For example, when Rivest-Shamir-Adleman (RSA) is used as the public key cryptosystem, the digital signature verification processing unit 100J compares a result obtained by decrypting the digital signature using a public key with a hash value of a character string obtained by concatenating machine information stored in a machine information storage area 110-1 and an issuance code stored in an issuance code storage area 110-3, to which padding according to a predetermined method has been applied. If both match, the digital signature verification processing unit 100J determines that verification is successful. The verification process performed by the digital signature verification processing unit 100J is also called a second verification process. The second verification process performs verification of a digital signature using, for example, a public key cryptosystem. The second verification process may be verification of a digital signature by public key cryptography such as RSA, but other verification methods may be adopted. When an Elliptic Curve Digital Signature Algorithm (ECDSA) is used, the digital signature verification processing unit 100J may verify a digital signature using a public key for a hash value of a character string obtained by concatenating and padding machine information stored in the machine information storage area 110-1 and an issuance code stored in the issuance code storage area 110-3. If there is no abnormality in the verification result, the digital signature verification processing unit 100J may determine that verification is successful.

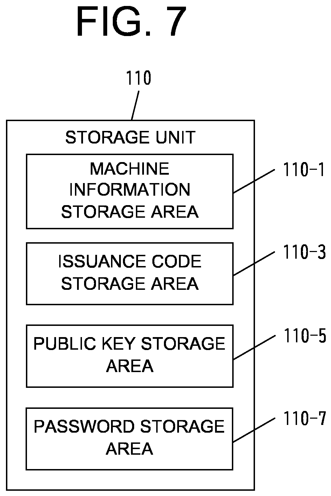

FIG. 7 is a block diagram of the storage unit 110 of the image forming apparatus 10. The storage unit 110 includes the machine information storage area 110-1, the issuance code storage area 110-3, a public key storage area 110-5, and a password storage area 110-7.

The machine information storage area 110-1 is an area for storing machine information. The machine information is information regarding the machine of the image forming apparatus 10, and is, for example, a character string representing a model name of the image forming apparatus 10, a serial number of the image forming apparatus 10, or the like.

The issuance code storage area 110-3 is an area for storing a reset key issuance code generated by the issuance code generation unit 100B. The controller 100 may display the issuance code read from the issuance code storage area 110-3 on the display unit 120.

The public key storage area 110-5 is an area for storing a public key used in a public key cryptosystem. The public key stored in the public key storage area 110-5 forms a key pair of a public key cryptosystem together with a secret key stored in a secret key storage area 210-1 of the server 20 described below.

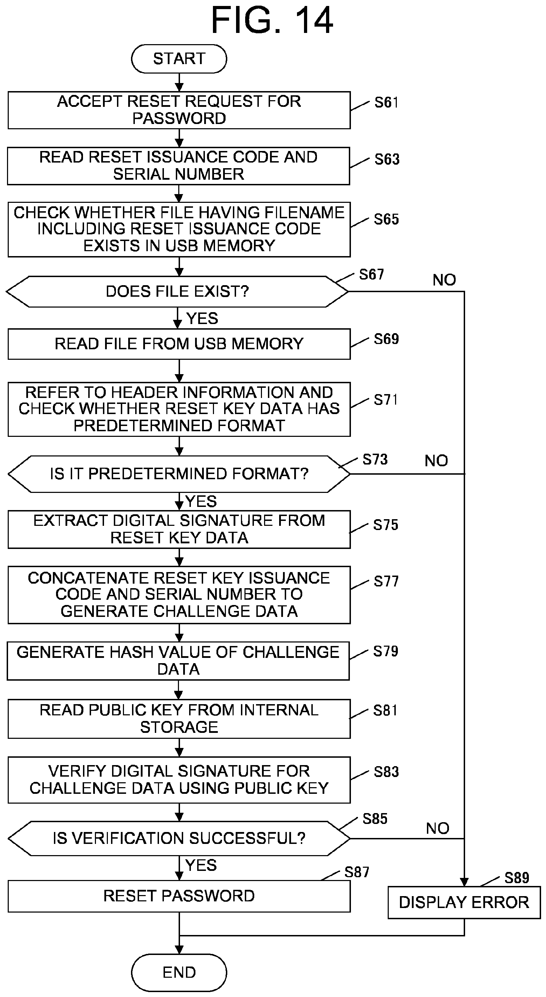

The password storage area 110-7 stores passwords including the administrator password. The controller 100 restricts changes to the password stored in the password storage area 110-7. In a normal process, the controller 100 permits a change to the administrator password stored in the password storage area 110-7 according to a result of authentication using the set administrator password. However, if an administrator forgets the administrator password, the administrator password cannot be changed by a normal process. In such a case, the controller 100 permits a change to the password by means other than authentication using the administrator password. That is, the controller 100 permits rewriting of the password stored in the password storage area 110-7 only when verification based on the filename of the reset key file in S67, verification based on the header information of the reset key file in S73, and verification based on the digital signature in S85, in FIG. 14 described below, have all succeeded.

Depending on whether the destination of a processing apparatus such as the image forming apparatus 10 is a specific destination, such as a country or region under a security-enhancement law regime, changing the password through a normal process may fail to satisfy security requirements, and the controller 100 needs to permit a password change and perform resetting based on the verification results of S67, S73, and S85 in FIG. 14.

### 1.5.2 Server

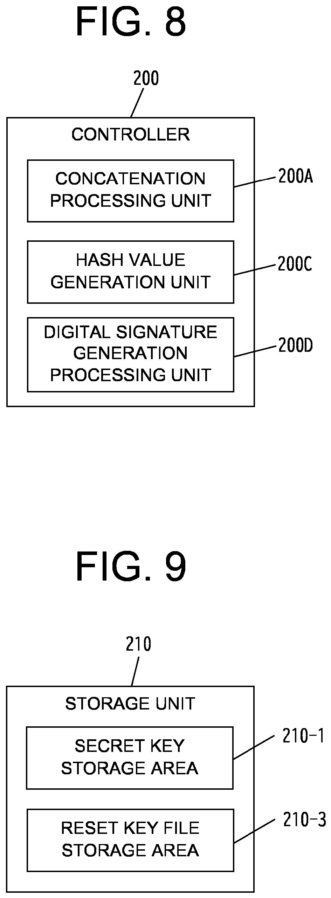

FIG. 8 is a block diagram of the controller 200 of the server 20 according to the first embodiment of the present disclosure. The controller 200 includes the concatenation processing unit 200A, the hash value generation unit 200C, and a digital signature generation processing unit 200D.

The concatenation processing unit 200A generates a character string in which an issuance code and machine information are concatenated. The concatenation processing unit 200A concatenates the issuance code and the machine information using the same concatenation method as the concatenation processing unit 100D of the image forming apparatus 10 described above.

The hash value generation unit 200C generates and outputs a hash value corresponding to an input character string. The hash value generation unit 200C generates a hash value using the same hash function as the hash value generation unit 100F of the image forming apparatus 10 described above.

The digital signature generation processing unit 200D generates a digital signature by applying padding to the hash value generated by the hash value generation unit 200C in a predetermined manner and then performing encryption processing using a secret key of a public key cryptosystem stored in the secret key storage area 210-1 described below.

FIG. 9 is a block diagram of the storage unit 210 of the server 20 according to the first embodiment of the present disclosure. The storage unit 210 includes the secret key storage area 210-1 and a reset key file storage area 210-3.

The secret key storage area 210-1 is an area for storing a secret key of a public key cryptosystem. The secret key stored in the secret key storage area 210-1 forms a key pair of a public key cryptosystem together with the public key stored in the public key storage area 110-5 of the image forming apparatus 10 described above.

The reset key file storage area 210-3 is an area for storing a reset key file. The reset key file has a filename including the issuance code entered by the key issuance authority holder F5. The reset key file includes header information indicating a format of the reset key file. The reset key file may include the issuance code and the machine information entered by the key issuance authority holder F5. Alternatively, the reset key file may include a character string in which the issuance code and the machine information are concatenated by the concatenation processing unit 200A. The reset key file includes digital signature data generated using a secret key by the digital signature generation processing unit 200D for a hash value of a character string in which the issuance code and the machine information are concatenated.

### 1.6 Administrator Password Reset Method

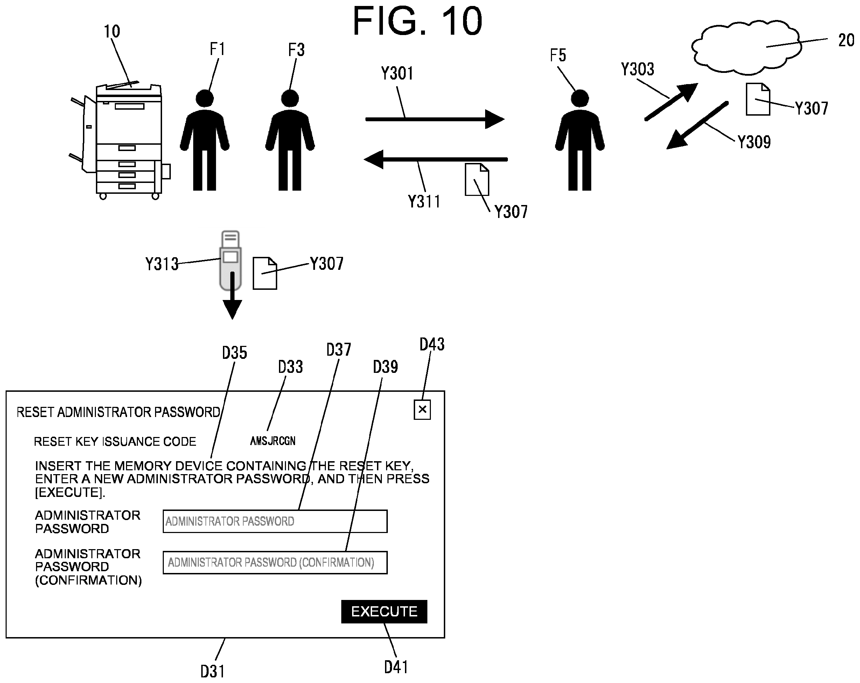

FIG. 10 is a schematic conceptual diagram of an administrator password reset method in the system 1 according to the first embodiment of the present disclosure. Although operations of the image forming apparatus 10 are performed by the respective units of the controller 100 illustrated in FIG. 6, the operations will be described, for convenience of description, as being executed by the controller 100. Similarly, operations of the server 20 will be described as being executed by the controller 200.

When the serviceperson F3 or the like performs a predetermined operation for executing a reset process of an administrator password of the image forming apparatus 10 via the operation unit 130, the controller 100 displays a screen D31 on the display unit 120.

The screen D31 includes a reset key issuance code display field D33, a message D35, password input fields D37 and D39, an execution button D41, and a cancel button D43.

The reset key issuance code display field D33 is a field for displaying an issuance code. The issuance code is, for example, a character string having 12 characters.

The message D35 is a message for instructing the serviceperson F3 or the like on operations necessary for resetting the administrator password. In the example of FIG. 10, the message D35 indicates connecting an external storage device in which a reset key file is stored to the connection unit 150, inputting a new administrator password to be set in the password input fields D37 and D39 via the operation unit 130, and operating the execution button D41. The password input fields D37 and D39, the execution button D41, and the cancel button D43 will be described below.

The serviceperson F3 or the like notifies the key issuance authority holder F5 of the issuance code displayed in the reset key issuance code display field D33 (Y301). Any means for notifying the issuance code can be used. For example, the serviceperson F3 or the like may send an email indicating the issuance code to the key issuance authority holder F5. Also, the serviceperson F3 or the like may notify the key issuance authority holder F5 of the issuance code by voice directly or via telephone or the like.

The key issuance authority holder F5 enters the notified issuance code into the server 20 (Y303). The controller 200 of the server 20 generates a reset key file (Y307), based on the entered issuance code. At that time, the controller 200 applies a digital signature to the reset key file using a secret key prepared in advance, and then provides the reset key file to the key issuance authority holder F5 (Y309). The reset key file has a file size of, for example, 512 bytes.

The server 20 may be a web server that publishes a web page for inputting an issuance code and outputting a reset key file. In this case, the key issuance authority holder F5 accesses a web page via a browser executed on a client terminal (not illustrated) and inputs the issuance code into the web page. The controller 200 generates a reset key file based on the issuance code and displays a link for downloading the reset key file on the web page. The key issuance authority holder F5 follows the link via the browser and downloads the reset key file to the client terminal.

Alternatively, the server 20 may be a mail server. In this case, for example, the key issuance authority holder F5 sends an email indicating the issuance code from a client terminal to an email address managed by the mail server. When the server 20 receives this email, the controller 200 generates a reset key file based on the issuance code indicated in the email and sends an email with the reset key file attached to the sender's address of the received email.

Next, the key issuance authority holder F5 provide the reset key file received from the server 20 to the serviceperson F3 or the like (Y311). As a method of providing the reset key file, for example, the key issuance authority holder F5 may send an email with the reset key file attached to the serviceperson F3 or the like, may send the reset key file via a file sharing service on the Internet, or the key issuance authority holder F5 may provide an external storage device such as a USB memory in which the reset key file is stored to the serviceperson F3 or the like.

According to the message D35, the serviceperson F3 or the like stores the obtained reset key file 307 in an external storage device (USB memory 313) and connects the USB memory 313 to the connection unit 150. The password input fields D37 and D39 of the screen D31 are fields for inputting a new password after resetting. The serviceperson F3 or the like enters a character string desired to be set as a new password in the password input fields D37 and D39 via the operation unit 130. Instead of displaying the characters entered in the password input fields D37 and D39 as they are, the controller 100 may display symbols such as asterisks (*) corresponding to the number of entered characters.

When the USB memory 313 is connected to the connection unit 150 and the same character string is entered in the password input fields D37 and D39, if the execution button D41 is operated, the controller 100 verifies whether or not a file having a predetermined filename of the reset key file is stored in the USB memory 313 and, if stored, executes verification for the reset key file read from the USB memory 313. The above verification process starts the first verification process at the timing when the "Execution" button of the execution button D41 is pressed, and starts the second verification process at the timing when the first verification process is completed.

If verification based on the reset key file is successful, the controller 100 changes the administrator password to the character string entered in the password input fields D37 and D39. If verification based on the reset key file fails, the controller 100 displays an error message (not illustrated). In this case, the administrator password is not changed.

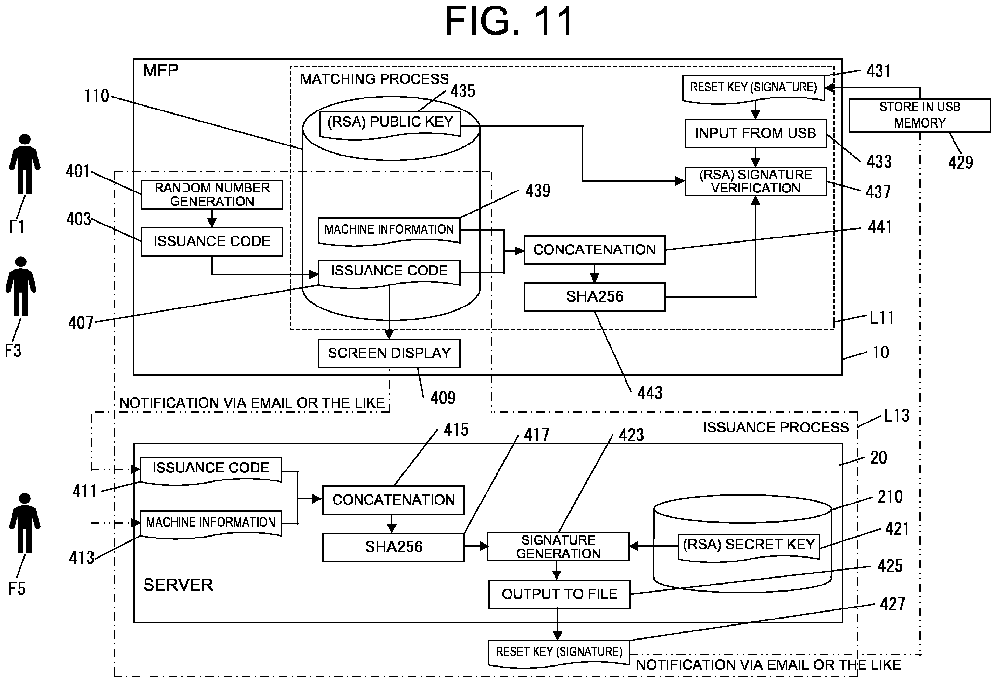

FIG. 11 is a schematic conceptual diagram of the system 1 according to the first embodiment of the present disclosure. A block surrounded by a dashed line L11 is a block related to a matching process, and a block surrounded by a dot-dash line L13 is a block related to an issuance process.

In the system of FIG. 11, a digital signature using a public key cryptosystem is used. Here, a Rivest-Shamir-Adleman (RSA) signature is used as the digital signature. An RSA key pair is generated in advance, a secret key is stored in the storage unit 210 of the server 20, and a public key is stored in the storage unit 110 of the image forming apparatus 10. Any digital signature using a public key cryptosystem other than an RSA signature may be used, such as an Elliptic Curve Digital Signature Algorithm (ECDSA) signature.

In the image forming apparatus 10, when the serviceperson F3 or the like performs a predetermined operation for transitioning to a screen for requesting a process of resetting the administrator password via the operation unit 130, the controller 100 generates a random number

(401), generates an issuance code by converting the generated random number into a character string of a predetermined length (403), stores it in the storage unit 110 (407), and displays the issuance code on the display unit 120 (409). The serviceperson F3 or the like reads the displayed issuance code and notifies the key issuance authority holder F5 of the issuance code. Also, at this time, the serviceperson F3 or the like notifies the key issuance authority holder F5 of unique machine information assigned to each image forming apparatus 10. The machine information may be printed on a housing of the image forming apparatus 10, a sticker or the like indicating the machine information may be pasted on the housing of the image forming apparatus 10, the machine information may be displayed on the display unit 120 of the image forming apparatus 10, or, without being indicated on the image forming apparatus 10 itself, the machine information may be indicated in a document such as a manual or a warranty attached to the image forming apparatus 10.

The key issuance authority holder F5 enters the notified issuance code into the server 20 (411) and inputs the machine information of the image forming apparatus 10 into the server 20 (413). The controller 200 of the server 20 generates challenge data by concatenating the entered issuance code and machine information (415) and calculates a hash value based on the challenge data (417). The controller 200 generates a digital signature for the calculated hash value (423) using a secret key (421) stored in advance in the storage unit 210, generates reset key data by adding predetermined header information to the generated digital signature, and outputs the reset key data as a reset key file (425). At that time, the controller 200 assigns a filename including the character string entered as the issuance code 411 to the reset key file. The controller 200 outputs the reset key file with the digital signature to the key issuance authority holder F5 (427).

The key issuance authority holder F5 sends the reset key file including the digital signature to the serviceperson F3 or the like, for example, by attaching the reset key file to an email. The serviceperson F3 or the like stores the received reset key file including the digital signature in an external storage device (here, a USB memory) and connects the USB memory to the connection unit 150 (here, a USB port).

When the serviceperson F3 or the like connects the USB memory to the connection unit 150 according to the message D35 on the screen D31, inputs a new password in the password input fields D37 and D39, and operates the execution button D41, the controller 100 performs, in response to this operation, the first verification process based on whether a reset key file is present (based on the filename of the reset key file). When verification is successful in the first verification process, the controller 100 reads the reset key file (431) including the digital signature via the USB port.

Also, the controller 100 generates a character string by concatenating the issuance code (407) stored in advance in the storage unit 110 and machine information (439) of the image forming apparatus 10 stored in advance in the storage unit 110 (411), and further calculates a hash value of the generated character string (443). Next, the controller 100 performs a second verification. Specifically, the digital signature verification processing unit 100J verifies whether the digital signature included in the reset key file is one generated using an appropriate secret key for the above-mentioned hash value, using a public key (435) stored in advance in the storage unit 110. If verification of the signature is successful, the controller 100 permits and executes resetting of the administrator password. If verification of the signature fails, the controller 100 displays, on the display unit 120, a message (not illustrated) notifying the serviceperson F3 or the like that verification has failed.

### 1.7 Issuance Processing Operation of Image Forming Apparatus 10

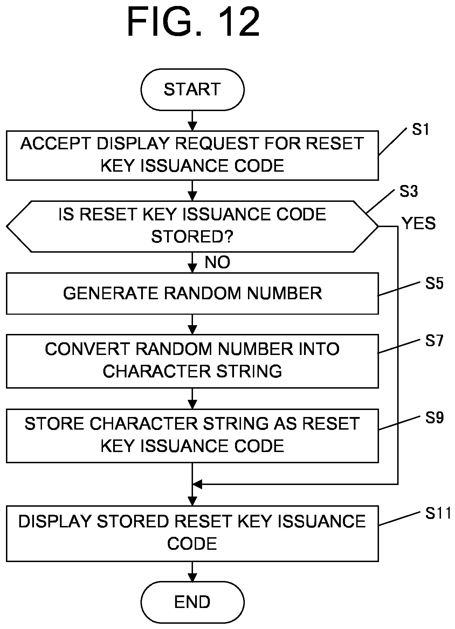

FIG. 12 is a flowchart illustrating an operation of the image forming apparatus 10 according to the first embodiment of the present disclosure. This operation is part of the issuance process performed in the image forming apparatus 10. Although the operation of each step is performed by any of the blocks illustrated in FIG. 6, it will be described as being executed by the controller 100 for convenience of explanation.

When the serviceperson F3 or the like performs a predetermined operation for transitioning to a screen for requesting a process of resetting the administrator password via the operation unit 130 (S1), the controller 100 determines whether an issuance code is stored in the issuance code storage area 110-3 (S3). If the issuance code storage area 110-3 does not store an issuance code (S3, NO), the controller 100 generates a random number (S5), converts the generated random number into a character string having a predetermined number of characters (S7), and stores the character string in the issuance code storage area 110-3 as a reset key issuance code (S9). The controller 100 displays the issuance code stored in the issuance code storage area 110-3 on the display unit 120 (S11). If the issuance code storage area 110-3 stores an issuance code (S3, YES), the controller 100 displays the issuance code on the display unit 120 (S11). The serviceperson F3 or the like notifies the key issuance authority holder F5 of the displayed issuance code.

### 1.8 Issuance Processing Operation of Server 20

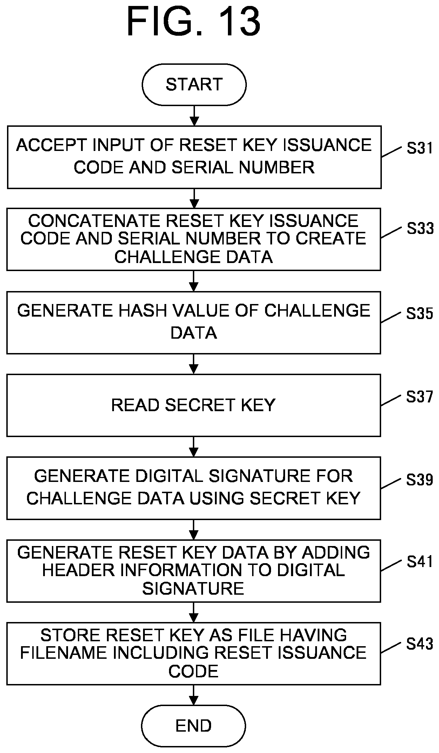

FIG. 13 is a flowchart illustrating an operation of the server 20 according to the first embodiment of the present disclosure. This operation is part of the issuance process performed by the server 20.

The key issuance authority holder F5 who received the notification from the serviceperson F3 or the like enters the notified issuance code and machine information of the image forming apparatus 10 via the operation unit 230 (S31). The controller 200 generates a character string in which the entered issuance code and machine information are concatenated as challenge data (S33) and generates a hash value from the challenge data (S35). The controller 200 reads the secret key from the secret key storage area 210-1 (S37). The controller 200 generates a digital signature for the hash value generated in S35 using the read secret key (S39), generates reset key data by adding header information to the digital signature (S41), and stores the reset key data in the reset key file storage area 210-2 (S43). At that time, the controller 200 assigns, to the reset key file, a filename including the issuance code entered in S31. The controller 200 outputs the reset key file stored in the reset key file storage area 210-2 to the key issuance authority holder F5. The key issuance authority holder F5 sends the reset key file to the serviceperson F3 or the like.

### 1.9 Matching Processing Operation of Image Forming Apparatus 10

FIG. 14 is a flowchart illustrating an operation of the image forming apparatus 10 according to the first embodiment of the present disclosure. This operation is a matching process performed in the image forming apparatus 10. Upon receiving the reset key file from the key issuance authority holder F5, the serviceperson F3 or the like stores the received reset key file in an external storage device (here, a USB memory) and connects the USB memory to the connection unit 150.

When the serviceperson F3 or the like who received the reset key file from the key issuance authority holder F5 performs an operation of resetting the administrator password via the operation unit 130 (S61), the controller 100 reads machine information (here, a serial number) from the machine information storage area 110-1 and reads an issuance code from the issuance code storage area 110-3 (S63). The controller 100 determines whether a file including the read issuance code in its filename is stored in the USB memory (S65).

If a corresponding file is stored in the USB memory (S67, YES), the controller 100 reads the corresponding file from the USB memory (S69) and determines whether the reset key data has a predetermined format based on header information of the file (S71). Regarding the determination based on header information, reference is made to the description of the header verification processing unit 100I.

When it is determined that the reset key data has the predetermined format (S73, YES), the controller 100 extracts the digital signature from the file (S75).

Meanwhile, the controller 100 generates challenge data by concatenating the serial number read from the machine information storage area 110-1 and the issuance code read from the issuance code storage area 110-3, and generates a hash value from the challenge data (S79).

The controller 100 reads the public key from the public key storage area 110-5 (S81) and verifies whether the digital signature extracted in S75 is an appropriate digital signature for the challenge data using the read public key (S83).

If verification of the digital signature is successful (S85, YES), the controller 100 permits and executes resetting of the administrator password (S87).

On the other hand, if verification of the digital signature fails (S85, NO), the controller 100 displays an error message (not illustrated) on the display unit 120 (S89). Also, when a corresponding file is not stored in the USB memory in S67 and when it is determined that the reset key data does not have the predetermined format in S73 (S73, NO), the controller 100 displays an error message (not illustrated) on the display unit 120 (S89).

### 1.10 Effects

According to the first embodiment, the storage unit 110 of the image forming apparatus 10 stores a public key of a public key cryptosystem. Even if a third party acquires and analyzes the image forming apparatus 10 and acquires the public key, it does not pose a security problem. In this respect, it differs from the method described in "1.4 General Administrator Password Reset Method".

Also, according to the first embodiment, when reset key data is input to the image forming apparatus 10, instead of manually inputting reset key data, the reset key data is input to the image forming apparatus 10 via an external storage device by connecting an external storage device storing the reset key data to the connection unit 150. For this reason, according to the first embodiment, there is no practical limit to the format and size of the reset key, and a reset key having a sufficient size to ensure security can be used. In this respect, it differs from manually inputting a reset key as described in "1.4 General Administrator Password Reset Method".

Also, since reset key data having a sufficient size can be utilized, an algorithm using an asymmetric cryptographic key can be used for key generation and verification. For this reason, according to the first embodiment, security can be improved without sacrificing convenience.

### 1.11 Modifications

In the first embodiment, the reset key issuance code is displayed on the display unit 120, but instead of or in addition to this, a file including the reset key issuance code may be output. For example, a file may be stored in an external storage device (USB memory or the like) connected via the connection unit 150, and the external storage device may be connected to the server 20.

Although it has been described that an asymmetric cryptosystem is used for generation and verification of a reset key, a Hash-based Message Authentication Code (HMAC) algorithm may be used instead of the asymmetric cryptosystem. As a hash function used in the HMAC algorithm, a function that generates a one-way hash value from input data, for example, SHA-256 or SHA-3, may be used.

In this case, the image forming apparatus 10 and the server 20 store a secret key in advance in their respective storage units 110 and 210. Upon receiving a reset key issuance code from the image forming apparatus 10, the server 20 generates a message authentication code (MAC value) by executing an HMAC algorithm using the received reset key issuance code and the secret key in the storage unit 210, and stores the message authentication code in a USB memory. When the USB memory is connected to the connection unit 150 and the MAC value is read, the controller 100 executes the same HMAC algorithm using the reset key issuance code generated by the controller 100 itself and the secret key stored in the storage unit 110 to generate a MAC value, compares the generated MAC value with the MAC value read from the USB memory, and permits resetting of the password if the two match.

In the above description, the connection unit 150 was used as a means for acquiring a reset key file from the outside, that is, a file acquisition unit, but the communication unit 140 may be used as the file acquisition unit.

In S61 and S63 of FIG. 14, it has been described that the first verification process is started in response to an operation for resetting the administrator password performed by the serviceperson F3 or the like. However, the trigger for starting the first verification process is not limited thereto. For example, when the serviceperson F3 performs a predetermined operation, it may be a timing when a USB is inserted (after UI display) and "Execution" is pressed after inputting an administrator password, or it may be a timing when a USB is inserted after inputting a new administrator password on a UI.

### 2. Second Embodiment

A second embodiment will be described. As illustrated in FIG. 14, in the first embodiment, verification based on a filename (S67) was performed, and if a corresponding file was present in a USB memory, the file was read from the USB memory and subsequent processing was performed. In contrast, in the second embodiment, if the determination result in S67 is "YES", the controller 100 displays, on the display unit 120, a message indicating that "administrator password reset process will start", and executes the processing after reading the file in response to a press of a "YES" button.

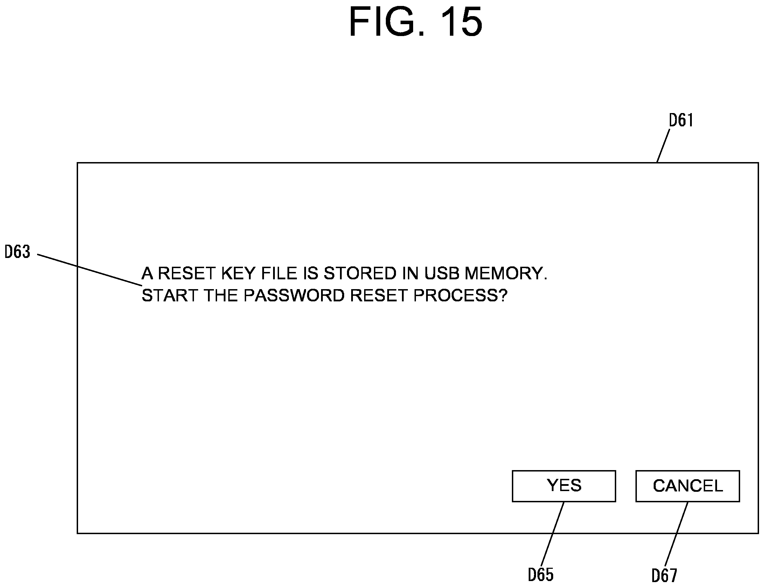

A screen D61 in FIG. 15 is an example of a screen displayed on the display unit 120 of the image forming apparatus 10 according to the second embodiment of the present disclosure. The screen D61 includes a message D63, a YES button D65, and a cancel button D67.

The message D63 is a message that informs the serviceperson F3 or the like that a reset key file is stored in a USB memory connected to the connection unit 150 and inquires of the serviceperson F3 or the like whether to start an administrator password reset process.

The YES button D65 is a button operated when the serviceperson F3 or the like gives an instruction to start the administrator password reset process. When the YES button D65 is pressed via the operation unit 130, the controller 100 continues processing from S69 onward in FIG. 14.

The cancel button D67 is a button operated when the serviceperson F3 or the like instructs not starting the administrator password reset process. When the cancel button D67 is operated via the operation unit 130, the controller 100 interrupts the processing of the flowchart of FIG. 14. In this case, the processing from S69 onward is not executed.

In the above description, the screen D61 is displayed when the determination result in S67 of FIG. 14 is "YES". However, instead, the screen D61 may be displayed when the determination result in S73 is "YES". Alternatively, the screen D61 may be displayed when the determination result in S85 is "YES".

### 3. Third Embodiment

A third embodiment will be described. In the first embodiment and the second embodiment, execution of an administrator password reset process was permitted and executed according to a verification result of a reset key file. In the third embodiment, execution of an administrator information update process is permitted and executed according to a verification result of a reset key file. The administrator information update process is information regarding an administrator of the image forming apparatus 10, which is stored in the storage unit 110 of the image forming apparatus 10. Administrator information may include, for example, an administrator's name, user identification information, contact information, and password.

In the third embodiment, instead of resetting the administrator password in S87 of FIG. 14, the controller 100 permits and executes a process of updating administrator information stored in the storage unit 110.

It should be noted that the process subject to control of permission or denial of execution according to a verification result of a reset key file may be a process other than an administrator password reset process and an administrator information update process. In these processes, the file is referred to as a "reset" key file because permission to reset or update information is controlled. However, the process does not necessarily have to be related to resetting or updating information. Depending on the content of the process to be controlled, the file may simply be referred to as a key file instead of a reset key file.

### 4. Variations

The present disclosure is not limited to the above-described embodiments and modifications, and various changes are possible. That is, embodiments obtained by combining technical means appropriately changed within a range not departing from the gist of the present disclosure are also included in the technical scope of the present disclosure. In the present disclosure, configurations for which a patent is sought are described in the attached claims, but it is not intended to exclude them from the technical scope on the grounds that they are not described in the claims.

Also, in the above specification, the expressions "in a case where" and "when" are used merely as examples, and are not intended to limited the configuration to the described content. Configurations other than those described in these cases or situations are also disclosed to the extent that they would be apparent to those skilled in the art, and rights are intended to be sought for such configurations as well.

Also, with respect to the order of the processes and data flows described in the specification, the order is not limited to the described order. For example, configurations in which part of the processing is omitted or the order is exchanged are also disclosed, and rights are intended to be sought for such configurations as well.

Also, although some of the above embodiments have been described separately for convenience of description, it goes without saying that they may be implemented in combination within a technically possible range.

In the above embodiment, a file (a reset key data file) has been described as being acquired from outside (a USB memory) via the file acquisition unit (connection unit 150), but the reset key data file may be data that is not in a file format. For example, reset key data acquired from another device via a data acquisition unit (the communication unit 140 or the connection unit 150) may be used. In this case, in the first verification process, instead of determining whether a reset key data file is present based on a filename, the first verification process may be performed based on data identification information corresponding to the issuance code and assigned to the reset key data.

A computer program that operates in each device in the embodiments is a program for controlling a CPU or the like (a program that causes a computer to function) so as to implement the functions of the above-described embodiments. Information handled by these devices is temporarily stored in a temporary storage device (for example, RAM) during processing, and then stored in storage devices such as various ROMs (read-only memories), HDDs, and SSDs (solid state drives), and is read out, modified, and written by the CPU as necessary.

Here, the recording medium for storing the computer program may be any of a semiconductor medium (for example, a ROM, a non-volatile memory card, etc.), an optical recording medium or magneto-optical recording medium (for example, a digital versatile disc (DVD), a magneto optical disc (MO), a mini disc (MD), a compact disc (CD), or a Blu-ray Disc (registered trademark) (BD), etc.), a magnetic recording medium (for example, a magnetic tape, a flexible disk, etc.), and the like. Further, not only may the functions of the above-described embodiments be implemented by executing the loaded computer program, but the functions of the present disclosure may also be implemented by processing performed in cooperation with an operating system or another application programs based on instructions of the computer program.

Also, when the computer program is distributed in the market, the computer program may be distributed while being stored in a portable recording medium, or may be transferred to a server computer connected via a network such as the Internet. In this case, it goes without saying that the storage device of the server computer is also included in the present disclosure.

### REFERENCE SIGNS LIST

1 system
10 image forming apparatus
20 server
100, 200 controller
100A random number generation unit
100B issuance code generation unit
100C display control unit
100D 200A concatenation processing unit
100F 200C hash value generation unit
100G decryption processor
100H filename verification processing unit
100I header verification processing unit
100J digital signature verification processing unit
110 210 storage unit
110A ROM (Read Only Memory)
110B RAM (Random Access Memory)
110C storage
110-1 machine information storage area
110-3 issuance code storage area
110-5 public key storage area
110-7 password storage area
120 220 display unit
130, 230 operation unit
140 240 communication unit
150 250 connection unit
160 image input unit
170 image forming unit
200D digital signature generation processing unit
210-1 secret key storage area
210-3 reset key file storage area
307 reset key file
313 USB memory
D1 D31, D61 screen
D3 D33 reset key issuance code display field
D5 D35 reset key input field
D7 D41 execution button
D9 OK button
D37 D39 password input field
D43 D67 cancel button
D63 message
D65 YES button
F1 administrator
F3 serviceperson
F5 key issuance authority holder

## Claims

1. A processing apparatus (10) comprising:
one or more controllers (100); and a data acquisition unit that acquires data from an external source; wherein
the one or more controllers (100)
perform a first verification process of determining, based on data identification information corresponding to a code, whether key data is present, the key data being data that includes key information generated based on the code and to which the data identification information is assigned; and
acquire, when the key data is determined in the first verification process to be present, the key data via the data acquisition unit and perform a second verification process based on the key information included in the key data.

2. The processing apparatus (10) according to claim 1, wherein the second verification process uses a public key cryptosystem.

3. The processing apparatus (10) according to claim 1, further comprising a code output unit,
wherein the one or more controllers (100) output the code from the code output unit.

4. The processing apparatus (10) according to claim 3, wherein
the code output unit is a display unit (120); and
the one or more controllers (100) display the code on the display unit (120).

5. The processing apparatus (10) according to claim 1, wherein
the data acquisition unit is a connection unit (150); and
the one or more controllers (100) acquire the key data by reading the key data from an external storage device connected via the connection unit (150).

6. The processing apparatus (10) according to claim 1,
wherein the one or more controllers (100) permit execution of a predetermined process according to results of the first verification process and the second verification process.

7. The processing apparatus (10) according to claim 6,
wherein the predetermined process is a process related to resetting a password set in the processing apparatus (10).

8. A method for controlling a processing apparatus (10) including one or more controllers (100) and a data acquisition unit that acquires data from an external source, the method comprising:
performing a first verification process of determining, based on data identification information corresponding to a code, whether key data is present, the key data being data that includes key information generated based on the code and to which the data identification information is assigned; and
when the key data is determined in the first verification process to be present, acquiring the key data via the data acquisition unit and performing a second verification process based on the key information included in the key data.

9. A system (1) comprising:
a first processing apparatus (10); and a second processing apparatus (20); wherein:
the first processing apparatus (10):
outputs a code;
performs a first verification process of determining, based on data identification information corresponding to the code, whether key data is present, the key data being data that includes key information generated based on the code and to which the data identification information is assigned; and
when the key data is determined in the first verification process to be present, acquires the key data and perform a second verification process based on the key information included in the key data, and
the second processing apparatus (20):
generates the key information based on the code output from the first processing apparatus (10);
generates the key data being data having the data identification information corresponding to the code and including the key information; and
outputs the key data.
